# EUROPÄISCHE PATENTSCHRIFT

(11) **EP 0 872 505 B1**
(45) Veröffentlichungstag und Bekanntmachung des Hinweises auf die Patenterteilung: **11.07.2001**
(21) Anmeldenummer: 97106231.0
(22) Anmeldetag: 16.04.1997
(51) Int. Cl.: C08G 59/68

(54) **Härtbare Mischungen aus Glycidylverbindungen, aminischen Härtern und heterocyclischen Beschleunigern**
Curable compositions based on glycidyl compounds, amine hardeners and heterocyclic accelerators
Compositions durcissables à base de composés glycidyles, durcisseurs aminiques et accélérateurs hétérocycliques

(43) Veröffentlichungstag der Anmeldung: 21.10.1998
(73) Patentinhaber: Vantico GmbH & Co. KG, 59192 Bergkamen (DE)
(72) Erfinder: Scherzer, Wolfgang, Dr., 59368 Werne (DE); Volle, Jörg, 59379 Selm-Bork (DE)
(74) Vertreter: Hoechst, Bruno Werner

(56) Entgegenhaltungen:
- EP-A- 0 019 161
- EP-A- 0 365 479
- US-A- 4 228 310
- CHEMICAL ABSTRACTS, vol. 91, no. 26, 24.Dezember 1979 Columbus, Ohio, US; abstract no. 212190, XP002041139 & JP 54 083 096 A (HITACHI LTD.) 2.Juli 1979
- CHEMICAL ABSTRACTS, vol. 102, no. 26, 1.Juli 1985 Columbus, Ohio, US; abstract no. 221666, XP002041140 & JP 59 232 117 A (TORAY THIOKOL CO. LTD.) 26.Dezember 1984

## Beschreibung

Die Erfindung betrifft härtbare Mischungen aus Glycidylverbindungen und aminischen Härtungsmitteln, welche als Härtungsbeschleuniger heterocyclische tertiäre Amine enthalten und welche bei langer Topfzeit noch eine schnelle Aushärtungsgeschwindigkeit aufweisen.

Härtbare Mischungen auf Basis von Glycidylverbindungen und aminischen Härtungsmitteln werden in der Industrie in weitem Umfang zur Beschichtung und Vergütung von metallischen und mineralischen Oberflächen verwendet.

Als Amine werden insbesondere aliphatische, cycloaliphatische, aromatische oder araliphatische Verbindungen sowie gegebenenfalls Imidazolingruppen enthaltende Polyaminoamide auf Basis von ein- oder mehrbasischen Säuren sowie deren Addukte mit Epoxidharzen eingesetzt.

Diese Verbindungen sind beschrieben in Lee & Neville, Handbook of Epoxy Resins, 1967, Chapter 6/1 to 10/19.

Die härtbaren Mischungen auf Basis von Epoxidharzen und diesen Aminverbindungen weisen in der Regel zwar eine ausreichend lange Topfzeit auf, jedoch ist ihre Härtungsgeschwindigkeit nach Auftrag auf die verschiedenen Substrate für viele Anwendungsgebiete zu gering.

Des weiteren ist die Viskosität vieler Verbindungen, insbesondere die der höheren Epoxidharzaddukte sowie der Polyaminoamide oder deren Addukte, verhältnismäßig hoch, vor allem im Bereich niedriger Temperaturen.

Die Härtungsgeschwindigkeit kann durch Zusatz geeigneter Härtungsbeschleuniger gesteigert werden.

Für diesen Zweck werden in einigen Systemen Mannichbasen tertiärer Amine eingesetzt, wie z. B. Tris(dimethylaminomethyl)phenol (DMP30).

Diese Verbindungen haben jedoch den Nachteil, daß sie aufgrund Ihrer starken Vergilbungsneigung und relativ hohen Viskosität, sowie insbesondere der stark verkürzten Topfzeit für zahlreiche Anwendungen nicht eingesetzt werden können.

Aus diesem Grunde werden in einigen Anwendungen phenolfreie Beschleuniger verwendet, die mindestens eine tertiäre Amingruppe enthalten. Ein typischer Vertreter dieser Klasse ist das Dimethylaminopropylamin. Bei diesen Beschleunigern treten zwar einige der oben genannten Probleme wie z. B. Vergilbungsneigung nicht mehr so stark auf, sie haben aber ebenfalls den Nachteil, daß mit einer deutlichen Steigerung der Härtungsgeschwindigkeit gleichzeitig die Topfzeit stark verkürzt wird.

Aufgabe der vorliegenden Erfindung war es daher, härtbare Mischungen auf Basis von Epoxidharzen und Aminen zur Verfügung zu stellen, welche eine niedrigere Viskosität aufweisen, deren Beschleuniger nicht zur Vergilbung neigen, die toxikologisch unbedenklich sind, die bei vergleichbar langen oder verlängerten Topfzeiten eine deutlich schnellere Härtungsgeschwindigkeit als die unbeschleunigten Mischungen aufweisen und deren physikalische, mechanische und optische Eigenschaften auf hohem Niveau bleiben.

Diese Aufgabe wird gelöst durch härtbare Mischungen auf Basis von Epoxidharzen und üblichen Aminhärtern, welche als Härtungsbeschleuniger heterocyclische Amine enthalten, herstellbar durch Umsetzung von Formaldehyd mit Aminen, die je eine primäre und eine tertiäre Amingruppe enthalten.

Gegenstand der Erfindung sind daher härtbare Mischungen auf Basis von Epoxidharzen und aminischen Härtungsmitteln, gegebenenfalls unter Mitverwendung von Lösungsmitteln, Weichmachern, UV-Stabilisatoren, Farbstoffen, Pigmenten, Füllstoffen, welche dadurch gekennzeichnet sind, daß als Härtungsbeschleuniger
1 - 20 Gew.-%, bezogen auf Epoxidharz, mindestens einer heterocyclischen Verbindung der allgemeinen Formel (I) 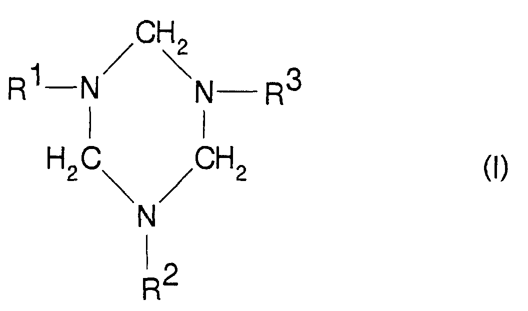 mitverwendet werden, in welcher R¹, R², R³ gleich oder verschieden die Reste

-(CH₂)ₐ-N-[(CH₂)_{b}-CH₃]₂

bedeuten, mit a = 2 oder insbesondere 3 und b = 1 oder insbesondere 0.

Ein weiterer Gegenstand der Erfindung sind härtbare Mischungen bestehend aus:
- a) 30-70 Gew.-%,: bezogen auf Epoxidharz + Härtungsmittel, Epoxidharz mit EP-Wert von 0,4-0,56
- b) 25-70 Gew.-%,: bezogen auf Epoxidharz + Härtungsmittel, aminische Härtungsmittel
- c) 1-10 Gew.-%,: bezogen auf Epoxidharz, Härtungsbeschleuniger der allgemeinen Formel (I)

Weitere Gegenstände der Erfindung sind durch die Ansprüche gekennzeichnet.

Die erfindungsgemäß mitverwendeten heterocyclischen Amine sind herstellbar durch Umsetzung von Formaldehyd mit Aminen der allgemeinen Formel (II)

H₂N-(CH₂)ₐ-N[(CH₂)_{b}-CH₃]₂ (II)

worin a und b die oben angegebene Bedeutung haben, im Molverhältnis von Formaldehyd zu Amin von 0,9 : 1 bis vorzugsweise 1 : 1.

Zur Herstellung wird im allgemeinen das Amin vorgelegt und Formaldehyd, vorzugsweise Paraformaldehyd, portionsweise zugegeben. Die Reaktion verläuft exotherm. Die Zugabe des Aldehyds wird daher so gesteuert, daß die Reaktionstemperatur von ca. 100 °C nicht überschritten wird. Erfindungsgemäß wird vorzugsweise zwischen ca. 30 °C - 80 °C gearbeitet. Das entstehende Reaktionswasser wird nach Zugabe der Gesamtmenge an Formaldehyd durch Erhöhung der Temperatur auf ca. 130 °C und bei gegebenenfalls reduziertem Druck aus der Reaktionsmischung entfernt. Der verbliebene Rückstand kann ohne weitere Aufreinigung als Härtungsbeschleuniger eingesetzt werden.

Die erfindungsgemäß mitverwendeten Epoxidverbindungen sind handelsübliche Produkte mit mehr als einer Epoxidgruppe pro Molekül, die sich von ein-oder/und mehrwertigen, ein- oder/und mehrkernigen Phenolen, insbesondere Bisphenolen, sowie Novolaken ableiten. Eine umfangreiche Aufzählung dieser Di- oder Polyphenole findet sich in dem Handbuch "Epoxidverbindungen und Epoxidharze" von A. M. Paquin, Springer Verlag, Berlin, 1958, Kapitel IV, und Lee & Neville "Handbook of Epoxy Resins", 1967, Chapter 2.

Es können auch Mischungen von zwei oder mehreren der Epoxidharze verwendet werden. Bevorzugt werden Glycidylverbindungen auf Basis von Bisphenol A(4,4'-Dihydroxy-diphenylpropan-2,2) mit Epoxidwerten von 0,4 bis 0,56 eingesetzt.

Es können auch Mischungen der Epoxidharze mit sogenannten reaktiven Verdünnern, wie z. B. Monoglycidylethern von Phenolen oder mono- oder difunktionalen aliphatischen oder cycloaliphatischen Alkoholen, verwendet werden. Diese reaktiven Verdünner dienen in erster Linie zur Viskositätsreduzierung und sollten, da sie die Endeigenschaften des Duromeren ungünstig beeinflussen, nur in geringen Mengen mitverwendet werden.

Die beispielsweise genannten Epoxidharze können sowohl für die härtbaren Kombinationen als auch zur Herstellung der im erfindungsgemäßen Verfahren ebenfalls einsetzbaren Härtungsmittel-Epoxid-Addukte verwendet werden.

Die erfindungsgemäß mitverwendeten Härtungsmittel sind aliphatische, cycloaliphatische, araliphatische oder aromatische Amine, gegebenenfalls Imidazolingruppen enthaltende Aminoamide sowie deren Addukte mit Glycidylverbindungen, die mehr als zwei reaktive Aminwasserstoffatome pro Molekül enthalten. Diese Verbindungen gehören zum allgemeinen Stand der Technik und sind beschrieben in beispielsweise Lee & Neville, "Handbook of Epoxy Resins", Mc Graw Hill Book Company, 1967, Chapter 6-10.

Für die Beschichtung von metallischen oder mineralischen Untergründen werden vorzugsweise cycloaliphatische Amine oder Polyaminoamide auf Basis von ein- oder mehrwertigen Carbonsäuren und Polyalkylenpolyaminen sowie deren Addukte mit Glycidylverbindungen eingesetzt.

Diese Härtungsmittel sind handelsübliche Produkte und werden beispielsweise von der Witco GmbH unter dem Warenzeichen EUREDUR® angeboten, insbesondere EUREDUR (ED) 43, ED 46, ED 350.

Härtungsmittel und Epoxidverbindungen werden in dem erfindungsgemäßen Verfahren vorzugsweise in etwa äquivalenten Mengen, das heißt bezogen auf aktive Aminwasserstoffatome und reaktive Epoxidgruppen, eingesetzt. Es ist aber auch möglich, Härtungsmittel oder Glycidylkomponente im Über- bzw. Unterschuß zu verwenden. Die jeweiligen Mengen liegen im Bereich von ca. 10-200 Gew.-%, bezogen auf Glycidylverbindungen, und richten sich nach den gewünschten Endeigenschaften des Reaktionsproduktes. Übliche katalytische Härter für Epoxidharze können neben den erfindungsgemäßen Härtungsbeschleunigern mitverwendet werden.

In der Regel wird man dabei so verfahren, daß man die erfindungsgemäßen Härtungsbeschleuniger und die üblichen katalytischen oder reaktiven Härter in dem gewünschten Verhältnis getrennt oder als Mischung der Epoxidverbindung zusetzt.

Das Mischungsverhältnis von Glycidylverbindung zu den erfindungsgemäß mitverwendeten Härtungsbeschleunigern der Formel I wird in Abhängigkeit der jeweils eingesetzten Verbindung und den gewünschten Endeigenschaften der gehärteten Endprodukte gesteuert.

Im allgemeinen wird bei Einsatz von flüssigen Glycidylethern auf Basis von Bisphenol A oder Bisphenol F mit Epoxidwerten zwischen ca. 0,50 bis ca. 0,56 eine Beschleunigermenge von 1-20 Gew.-%, bezogen auf Glycidylether, eingesetzt; erfindungsgemäß bevorzugt ist eine Menge von ca. 3-10 Gew.-%.

Der besondere Vorteil der erfindungsgemäßen härtbaren Mischungen liegt in ihrem ausgezeichneten Härtungsverhalten bei Temperaturen von 10-40 °C und hohen relativen Luftfeuchtigkeitswerten bis ca. 95 %.

Je nach Anwendungsgebiet und Verwendungszweck können in den erfindungsgemäßen Epoxidharz/Härtungsmittel-Mischungen anorganische und/oder organische Zusätze wie feinteilige Sande, Talk, Kieselsäure, Tonerde, Metalle oder Metallverbindungen in Span- und Pulverform, thixotropierende Mittel, faserartige Stoffe wie z. B. Asbest und Glasstapelfasern, Pigmente, flammverzögernde Stoffe, Lösungsmittel, Farbstoffe, Weichmacher, Bitumen, Mineralöle, zugesetzt werden.

Die erfindungsgemäßen härtbaren Mischungen können eingesetzt werden zur Beschichtung von saugenden oder nichtsaugenden Untergründen wie beispielsweise Natursteine, Marmor, Beton, Metalle, Glas.

### Analysenmethoden

### Viskosität

Gemessen mit Haake Rotationsviskosimeter RV 20 nach Angaben des Herstellers.

### Farbzahl

Gemessen nach DIN 53 995 mit dem Farbmeßgerät Lovibond (Hazen Farbzahl, APHA).

### Aminzahl

Gemessen nach DIN 16 945.

### Tecam-Wert

Wert für die Gelierungszeit, gemessen mit dem Tecam Gelation Timer GT3 der Firma Techne, Cambridge, GB, bei 23 °C und 50 % relativer Luftfeuchtigkeit. Probenmischung aus Harz und Härter und Beschleuniger = 250 g.

### Härte nach Shore D

Gemessen mit dem Gerät Typ 38009 der Firma Karl Frank GmbH an Prüfkörpern von 30 mm Durchmesser und 6 mm Dicke nach 1, 2, 3 und 7 Tagen.

### Beispiele

### Beispiel 1

102 g (1 mol) Dimethylaminopropylamin wurden im Reaktionsbehälter vorgelegt und auf etwa 30 °C erwärmt. Unter starkem Rühren wurden 30 g (1 mol) Paraformaldehyd in 3 Portionen von etwa 10 g so zugegeben, daß die Temperatur 80 °C nicht überschritt (exotherme Reaktion).

Nun ließ man etwa 30 min nachreagieren, bis ein klares, von Feststoffen freies Reaktionsprodukt vorlag. Dann heizte man das Reaktionsprodukt auf. Ab etwa 102 °C Sumpftemperatur begann die Destillation des freiwerdenden Wassers. Die Temperatur wurde innerhalb von ca. 30 min bis 130 °C erhöht. Bei 130 °C ließ man 30 min nachrühren und verminderte danach den Druck auf 1 mbar, um das Produkt von Restwasser und restlichem freien Dimethylaminopropylamin zu befreien.

Das Gesamtdestillat betrug etwa 19 g. Anschließend brach man das Vakuum mit Stickstoff und ließ das Reaktionsprodukt abkühlen.

| | | |
|---|---|---|
| Analysenwerte: | Aminzahl: | ca. 980 mg KOH/g |
| | Viskosität/25 °C: | 29 mPa·s |
| | Farbzahl: | 30 (APHA) |

### Beispiel 2

Gemäß Beispiel 1 wurden umgesetzt:
130 g Diethylaminopropylamin
30 g Paraformaldehyd

| | | |
|---|---|---|
| Analysenwerte: | Aminzahl: | ca. 790 mg KOH/g |
| | Viskosität/25 °C: | 39 mPa·s |
| | Farbzahl: | 35 (APHA) |

### Beispiel 3

Gemäß Beispiel 1 wurden umgesetzt:
116 g Diethylaminoethylamin
30 g Paraformaldehyd

| | | |
|---|---|---|
| Analysenwerte: | Aminzahl: | ca. 1100 mg KOH/g |
| | Viskosität/25 °C: | 24 mPa·s |
| | Farbzahl: | 30 (APHA) |

### Beispiel 4

Gemäß Beispiel 1 wurden umgesetzt:
260 g Diethylaminopropylamin
102 g Dimethylaminopropylamin
90 g Paraformaldehyd

| | | |
|---|---|---|
| Analysenwerte: | Aminzahl: | ca. 840 mg KOH/g |
| | Viskosität/25 °C: | 36 mPa·s |
| | Farbzahl: | 30 (APHA) |

### Beispiel 5

Gemäß Beispiel 1 wurden umgesetzt:
130 g Diethylaminopropylamin
204 g Dimethylaminopropylamin
90 g Paraformaldehyd

| | | |
|---|---|---|
| Analysenwerte: | Aminzahl: | ca. 900 mg KOH/g |
| | Viskosität/25 °C: | 33 mPa·s |
| | Farbzahl: | 35 (APHA) |

### Beispiel 6

Gemäß Bepiel 1 wurden umgesetzt:
195 g Diethylaminopropylamin
153 g Dimethylaminopropylamin
90 g Paraformaldehyd

| | | |
|---|---|---|
| Analysenwerte: | Aminzahl: | ca. 870 mg KOH/g |
| | Viskosität/25 °C: | 34 Pa·s |
| | Farbzahl: | 30 (APHA) |

### Beispiel 7

Gemäß Beispiel 1 wurden umgesetzt:
174 g Diethylaminoethylamin
153 g Dimethylaminopropylamin
80 g Paraformaldehyd

| | | |
|---|---|---|
| Analysenwerte: | Aminzahl: | 1060 mg KOH/g |
| | Viskosität/25 °C: | 25 mPa·s |
| | Farbzahl: | 50 (APHA) |

**Tabelle I**

| **Beispiel** | **Beschleuniger Beispiel** | **g Beschleuniger** | **Härter** | **g Härter** | **Harz** | **g Harz** |
|---|---|---|---|---|---|---|
| 1 | - | - | ED 46³ | 50 | EP 783⁵ | 100 |
| 2 | 2 | 6 | " | " | " | " |
| 3 | 1 | 6 | " " | | " | " |
| 4 | 5 | 6 | " | " | " | " |
| 5 | 7 | 6 | " | " | " | " |
| 6 | 3 | 6 | " | " | " | " |
| Vergl. 1 | DMP30¹ | " | " | " | " | " |
| Vergl. 2 | DMAPA² | " | " | " | " | " |
| 7 | - | - | ED 43⁴ | 60 | EP 783 | 100 |
| 8 | 2 | 5 | " | " | " " | |
| 9 | 1 | 5 | " | " | " | " |
| Vergleich 3 | DMP30 | 5 | " | " | " | " |
| Vergleich 4 | DMAPA | 5 | " | " | " | " |
| 10 | - | - | ED 350⁶ | 50 | EP 783 | 100 |
| 11 | 2 | 8 | " | " | " | " |
| 12 | 1 | 8 | " | " | " | " |
| 13 | 6 | 8 | " | " | " | " |
| Vergleich 5 | DMP30 | 8 | " | " | " | " |
| Vergleich 6 | DMAPA | 8 | " | " | " | " |
| 14 | - | 5 | ED 350 | 50 | EP 710⁷ | 100 |
| 15 | 2 | " | " | " | " | " |
| 16 | 1 | " | " | " | " | " |
| 17 | 6 | " | " | " | " | " |
| 18 | 3 | " | " | " | " | " |
| 19 | 1 | 2,5 | " | " | " | " |
| 20 | 1 | 10 | " | " | " | " |
| 21 | 2 | 10 | " | " | " | " |
| 22 | 3 | 10 | " | " | " | " |
| Vergleich 7 | DMP30 | 5 | " | " | " | " |
| Vergleich 8 | DMAPA | 5 | " | " | " | " |

| | | | | | | |
|---|---|---|---|---|---|---|
| ¹ DMP30 = Tris(dimethylaminomethyl)phenol | | | | | | |
| ² DMAPA = N,N-Dimethylaminopropylamin | | | | | | |
| ³ ED 46 = modifiziertes Addukt auf Basis cycloaliphatischer und araliphatischer Amine und Glycidylether auf Basis von Bisphenol A mit einer Aminzahl (AZ) von ca. 325 | | | | | | |
| ⁴ ED 43 = modifiziertes Addukt auf Basis cycloaliphatischer und araliphatischer Amine und Glycidylether auf Basis von Bisphenol A mit einer AZ von ca. 270 | | | | | | |
| ⁵ EP 783 = modifiziertes Epoxidharz auf Basis von Bisphenol A und Bisphenol F und aliphatischem Verdünner mit EP-Wert von 0,520 | | | | | | |
| ⁶ ED 350 = Polyaminoimidazolin mit einer AZ von 390 | | | | | | |
| ⁷ EP 710 = Diglycidylether auf Basis von Bisphenol A mit einem EP-Wert von 0,54 | | | | | | |

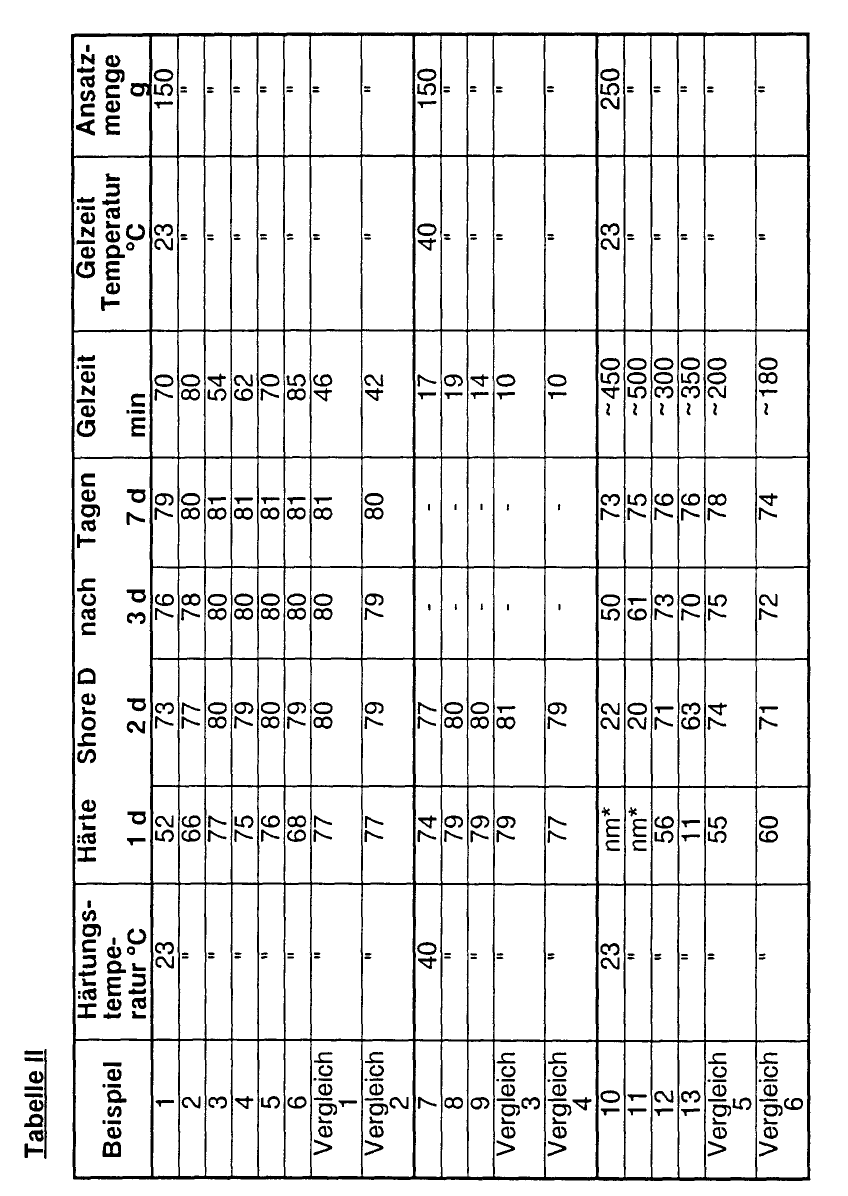

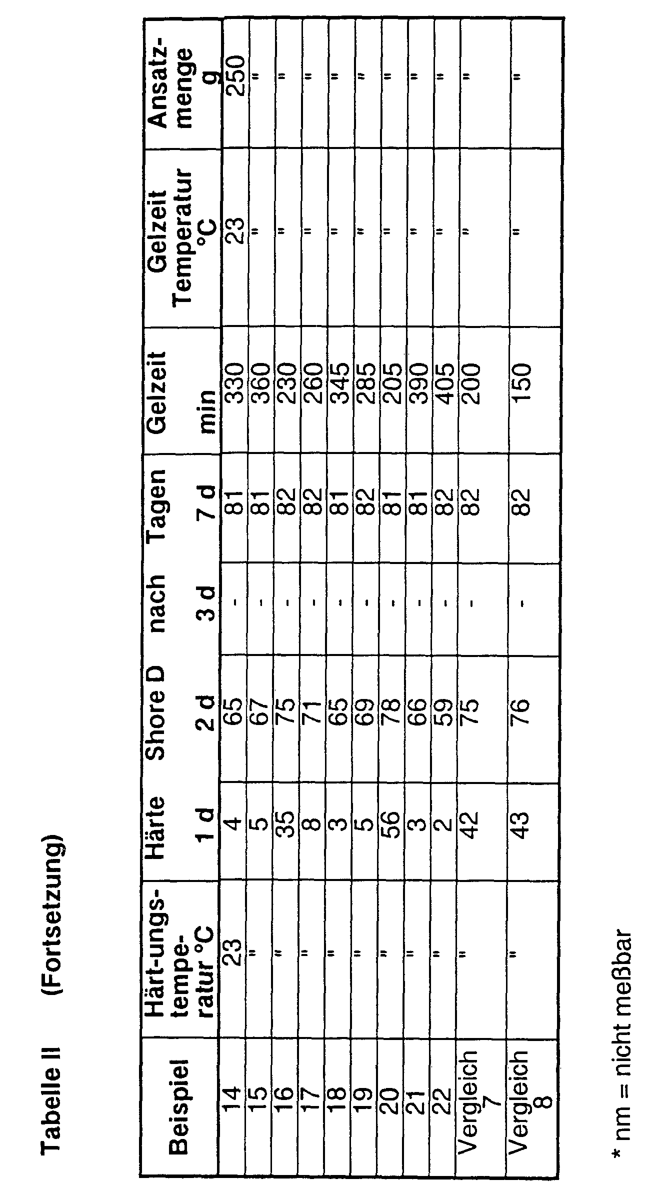

## Patentansprüche

1. Härtbare Mischungen auf Basis von Epoxidharzen und aminischen Härtungsmitteln und Härtungsbeschleunigern, gegebenenfalls unter Mitverwendung von Lösungsmitteln, Weichmachern, UV-Stabilisatoren, Farbstoffen, Pigmenten, Füllstoffen, dadurch gekennzeichnet, daß als Härtungsbeschleuniger
1-20 Gew.-%, bezogen auf Epoxidharz, mindestens einer heterocyclischen Verbindung der allgemeinen Formel (I) 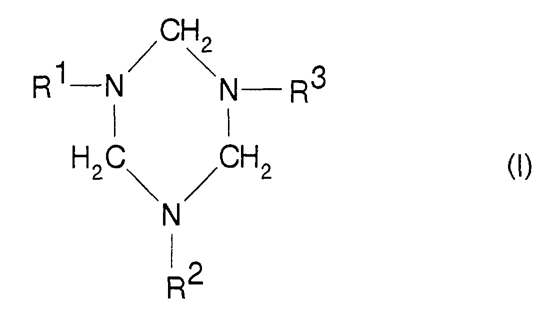 mitverwendet werden, in welcher R¹, R², R³ gleich oder verschieden die Reste
-(CH₂)ₐ-N-[(CH₂)_{b}-CH₃]₂
bedeuten, mit a=2 oder 3 und b=0 oder 1.

2. Härtbare Mischungen gemäß Anspruch1, dadurch gekennzeichnet, daß als Härtungsbeschleuniger Verbindungen der Formel (I) mit a=3 und b=0 mitverwendet werden.

3. Härtbare Mischung gemäß Anspruch 1, bestehend aus:
a) 30-70 Gew.-%, bezogen auf Epoxidharz + Härtungsmittel, Epoxidharz mit EP-Wert von 0,4-0,56
b) 25-70 Gew.-%, bezogen auf Epoxidharz + Härtungsmittel, aminische Härtungsmittel
c) 1-10 Gew.-%, bezogen auf Epoxidharz, Härtungsbeschleuniger der allgemeinen Formel (I).

4. Härtbare Mischungen gemäß Anspruch 3, dadurch gekennzeichnet, daß als Epoxidharze flüssige Glycidylether auf Basis von Bisphenol A und/oder Bisphenol F mitverwendet werden.

5. Härtbare Mischung gemäß Anspruch1, bestehend aus
a) 80 bis 95 Gew.-% Epoxidharz mit EP-Werten zwischen 0,4-0,56 und
b) 5 bis 20 Gew.-% Härtungsbeschleuniger der Formel (I).

## Claims

1. A curable mixture based on epoxy resins and aminic hardeners and cure accelerators, where appropriate with the concomitant use of solvents, plasticisers, UV stabilisers, dyes, pigments, fillers, wherein there is used as cure accelerator
from 1 to 20 % by weight, based on epoxy resin, of at least one heterocyclic compound of the general formula (I) 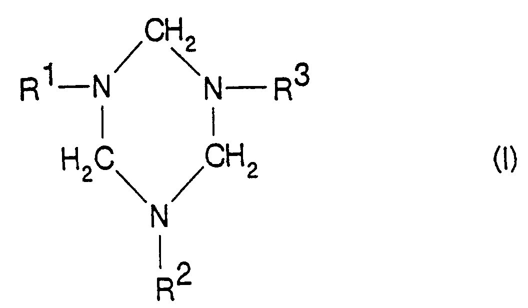 wherein R¹, R² and R³, which may be the same or different, are
-(CH₂)ₐ-N-[(CH₂)_{b}-CH₃]₂
radicals in which a = 2 or 3 and b = 0 or 1.

2. A curable mixture according to claim 1, wherein there are used as cure accelerators compounds of formula (I) in which a = 3 and b = 0.

3. A curable mixture according to claim 1 consisting of:
a) from 30 to 70 % by weight, based on epoxy resin + hardeners, of epoxy resin having an EP value of from 0.4 to 0.56
b) from 25 to 70 % by weight, based on epoxy resin + hardeners, of aminic hardeners
c) from 1 to 10 % by weight, based on epoxy resin, of cure accelerator of the general formula (I).

4. A curable mixture according to claim 3, wherein there is used as an epoxy resin a liquid glycidyl ether based on bisphenol A and/or bisphenol F.

5. A curable mixture according to claim 1 consisting of
a) from 80 to 95 % by weight of epoxy resin having EP values of from 0.4 to 0.56 and
b) from 5 to 20 % by weight of cure accelerator of formula (I).

## Revendications

1. Mélanges durcissables à base de résines époxyde et de durcisseurs amine et d'accélérateurs de durcissement, éventuellement avec utilisation conjointe de solvants, de plastifiants, de stabilisants contre l'effet des UV, de colorants, de pigments, de charges, caractérisés en ce qu'on utilise conjointement comme accélérateurs de durcissement
de 1 à 20% en poids, par rapport à la résine époxyde, d'au moins un composé hétérocyclique de formule générale (I) 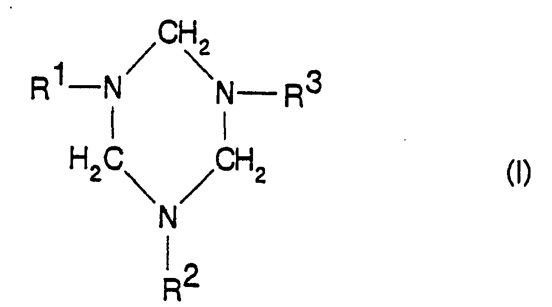 dans laquelle R¹, R², R³ identiques ou différents représentent les groupes
-(CH₂)ₐ-N-[(CH₂)_{b}-CH₃]₂,
avec a = 2 ou 3 et b = 0 ou 1.

2. Mélanges durcissables selon la revendication 1, caractérisés en ce qu'on utilise conjointement comme accélérateur de durcissement des composés de formule (I) avec a = 3 et b= 0.

3. Mélange durcissable selon la revendication 1, constitué de :
a) 30 à 70% en poids, par rapport à la résine époxyde + durcisseur, de résine époxyde ayant un indice EP de 0,4-0,56
b) de 25 à 70% en poids, par rapport à la résine époxyde + durcisseur, de durcisseurs amine
c) de 1 à 10% en poids, par rapport à la résine époxyde + durcisseur, d'accélérateur de durcissement de formule générale (I).

4. Mélanges durcissables selon la revendication 3, caractérisés en ce qu'on utilise conjointement comme résines époxyde des éthers de glycidyle liquides à base de bisphénol A et/ou de bisphénol F.

5. Mélanges durcissables selon la revendication 1, constitués de
a) 80 à 95% en poids de résine époxyde ayant des valeurs d'indice d'époxyde comprises entre 0,4 et 0,56 et
b) de 5 à 20% en poids d'un accélérateur de durcissement de formule (I).
